# EUROPÄISCHE PATENTSCHRIFT

(11) **EP 4 033 314 B1**
(45) Veröffentlichungstag und Bekanntmachung des Hinweises auf die Patenterteilung: **15.05.2024**
(21) Anmeldenummer: 21153550.5
(22) Anmeldetag: 26.01.2021
(51) Int. Cl.: G05B 19/409, G05B 9/02

(54) **EREIGNISBEDINGTE LADEBESCHRÄNKUNGEN EINES SERVERS EINES LEITSYSTEMS EINER TECHNISCHEN ANLAGE**
EVENT-RELATED LOAD RESTRICTIONS FOR A SERVER OF A CONTROL SYSTEM OF A TECHNICAL INSTALLATION
RESTRICTIONS DE CHARGE LIÉES À L'ÉVÉNEMENT D'UN SERVEUR D'UN SYSTÈME DE COMMANDE D'UNE INSTALLATION TECHNIQUE

(43) Veröffentlichungstag der Anmeldung: 27.07.2022
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A2- 2 038 714
- US-A1- 2009 077 055
- US-A1- 2017 017 228

## Beschreibung

Die Erfindung betrifft ein Leitsystem für eine technische Anlage, insbesondere Prozess- oder Fertigungsanlage, das einen Operator Station Server und einen Engineering Station Server aufweist, wobei der Engineering Station Server ein computerimplementiertes Entwurfswerkzeug umfasst, mit dem eine Automatisierungskonfiguration für eine Automatisierung der technischen Anlage erstellbar ist, und wobei der Engineering Station Server dazu ausgebildet ist, die Automatisierungskonfiguration für ein Bedienen und Beobachten der technischen Anlage an den Operator Station Server zu übertragen. Außerdem betrifft die Erfindung ein Verfahren zum Betrieb einer technischen Anlage mit einem Leitsystem.

Ein Leitsystem einer technischen Anlage umfasst viele Komponenten, die während des Lebenszyklus der Anlage projektiert, geladen und aktualisiert werden müssen. Die Komponenten eines Leitsystems (Automatisierungen, Operator Station Server, usw.) werden bei Projektierungsänderungen aus dem Engineering Station Server heraus beispielsweise in den Operator Station Server geladen. Ein solches Leitsystem ist beispielsweise in der EP 3 623 891 A1 offenbart.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Sind Operatoren und Projekteure des Leitsystems bzw. der technischen Anlage nicht "synchronisiert", da sie sich beispielsweise an unterschiedlichen Orten befinden oder sich aus anderen Gründen nicht erreichen können, kann es passieren, dass durch das nicht abgestimmte Laden von Automatisierungsdaten auf den Operator Station Server der Operator in mitten einer Fehlerbehandlung oder einer kritischen Optimierung die Kontrolle über eine Bedienung und Beobachtung der technischen Anlage verliert und die Anlage dadurch Schaden nehmen kann. Zudem ist es möglich, dass sich der Operator Station Server selbst gerade in einer Situation befindet, in der ein Laden zu Problemen führen kann (beispielsweise bei einer drohenden Überlastung bzw. Überschreitung der Verarbeitungskapazitäten des Operator Station Servers).

Die US 2009/0077055 A1 offenbart, dass ein Operator manuell das Laden von Informationen auf einen Operator Station Server für ein Bedienen und Beobachten unterbinden kann.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Der Erfindung liegt die Aufgabe zugrunde, ein Leitsystem für eine technische Anlage anzugeben, welches ein Bedienen und Beobachten der technischen Anlage mit einer hohen Verfügbarkeit ermöglicht.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betrieb einer technischen Anlage mit einem Leitsystem, insbesondere Prozess- oder Fertigungsanlage, gemäß Anspruch 9. Vorteilhafte Weiterbildungen ergeben sich aus den abhängigen Ansprüchen.

Ein Leitsystem eingangs beschriebener Art ist erfindungsgemäße dadurch gekennzeichnet, dass der Operator Station Server dazu ausgebildet ist, beim Vorliegen einer Abbruchbedingung ein Empfangen oder ein Verarbeiten der Automatisierungskonfiguration für das Bedienen und Beobachten der technischen Anlage für eine bestimmte Zeitdauer zu verweigern. Dabei ist der Operator Station Server dazu ausgebildet, das Vorliegen der Abbruchbedingung durch das Erkennen einer möglichen Überlastung des Operator Station Servers durch das Empfangen der Automatisierungskonfiguration von dem Engineering Station Server oder durch das Verarbeiten der Automatisierungskonfiguration durch den Operator Station Server automatisiert zu ermitteln.

Der Operator Station Server ist demnach dazu ausgebildet, das Vorliegen der Abbruchbedingung automatisiert (d.h. ohne Eingriff durch den Operator oder andere Personen) zu ermitteln. Dies erfolgt durch das Erkennen einer möglichen Überlastung des Operator Station Servers durch das Empfangen der Automatisierungskonfiguration von dem Engineering Station Server oder durch das Verarbeiten der Automatisierungskonfiguration. Der Operator Station Server kann dabei seine aktuelle Belastung bzw. seine aktuell freien Ressourcen mit der zu erwartenden Mehrbelastung durch das Empfangen (oder Verarbeiten) der neuen bzw. aktualisierten Automatisierungskonfiguration vergleichen, um eine Prognose bezüglich einer potenziellen Überlastung zu erstellen.

Die Automatisierungskonfiguration, die mittels des computerimplementierten Entwurfswerkzeuges auf dem Engineering Station Server erstellbar ist, dient der Bedienung und Beobachtung der technischen Anlage. Die Automatisierungskonfiguration kann beispielsweise Anlagenbilder umfassen, welche der Operator Station Server nach dem Empfang an einen separaten Operator Station Client zur visuellen Darstellung für einen Operator der technischen Anlage übertragen kann. Dabei handelt es sich bei den Anlagenbildern um üblicherweise für Leitsysteme verwendete Bedienbilder, welche grafische Repräsentationen einzelner Elemente der technischen Anlage umfassen und zur Darstellung eines Status der einzelnen Elemente, eines (z.B. verfahrenstechnischen) Zusammenhangs zwischen den Elementen oder dgl. dienen.

Die Anlagenbilder können dabei eine Alarmmeldungsanzeige umfassen. Diese kann beispielsweise in tabellarischer Auflistung einen Überblick über in dem Leitsystem aufgekommene Alarmmeldungen liefern. Sie wird auch als Meldefolgeanzeige bezeichnet.

Der Operator Station Server ist erfindungsgemäß dazu ausgebildet, beim Vorliegen einer Abbruchbedingung das Empfangen der neuen oder aktualisierten Automatisierungskonfiguration von dem Engineering Station Server oder das Verarbeiten der Automatisierungskonfiguration für eine bestimmte Zeitdauer zu unterbrechen. Dadurch können einer drohenden Überlastung des Operator Station Servers und/oder einer Unterbrechung der Bedienung und Beobachtung der technischen Anlage vorgebeugt werden. Dadurch kann die Verfügbarkeit der Bedienung und Beobachtung der technischen Anlage vorteilhafterweise erhöht werden.

Bevorzugt ist der Operator Station Server dazu ausgebildet ist, den Engineering Station Server über die Verweigerung des Empfangens oder des Verarbeitens der Automatisierungskonfiguration zu informieren. Der Operator Station Server kann dem Engineering Station Server beispielsweise mitteilen, dass er für die bestimmte Zeitdauer von 10 Minuten keine Automatisierungskonfiguration empfangen oder verarbeiten kann. Er kann ihm auch mitteilen, dass eine Größe der Automatisierungskonfiguration einen bestimmten Betrag nicht überschreiten darf oder dergleichen.

Besonders bevorzugt ist der der Operator Station Server dazu ausgebildet, einen Operator der technischen Anlage über die Verweigerung des Empfangens oder des Verarbeitens der Automatisierungskonfiguration zu informieren. Auch hier kann der Operator Station Server dem Operator beispielsweise mitteilen, dass er für die bestimmte Zeitdauer von 10 Minuten keine Automatisierungskonfiguration empfangen oder verarbeiten kann oder dergleichen.

Im Rahmen einer vorteilhaften Weiterbildung des Leitsystems ist der Operator Station Server dazu ausgebildet, eine Alarmmeldung zu erzeugen, die eine Information über das Verweigern des Empfangens oder des Verarbeitens der Automatisierungskonfiguration durch den Operator Station Server beinhaltet. Diese Alarmmeldung kann in der Alarmmeldeanzeige (Meldefolgeanzeige) des Leitsystems allen von der Unterbrechung betroffenen Teilnehmern (Projekteur, Operator etc.) dargeboten werden. Dem Operator der technischen Anlage wird die Alarmmeldung vorzugsweise durch einen Operator Station Client (visuell) dargeboten, den der Operator zur Bedienung und Beobachtung der technischen Anlage verwendet.

Besonders bevorzugt ist der Operator Station Server dazu ausgebildet, auch ein Ende der bestimmten Zeitdauer automatisiert zu ermitteln. Dies erfolgt vorzugsweise durch das Erkennen eines Wegfalls einer möglichen Überlastung des Operator Station Servers durch das Empfangen der Automatisierungskonfiguration von dem Engineering Station Server oder durch das Verarbeiten der Automatisierungskonfiguration.

Bei einer vorteilhaften Weiterbildung der Erfindung ist der Operator Station Server dazu ausgebildet, das Vorliegen der Abbruchbedingung von einem Operator der technischen Anlage beim Bedienen und Beobachten der technischen Anlage mitgeteilt zu bekommen. Nimmt der Operator beispielsweise gerade Optimierungen vor, kümmert sich um Fehlerbehandlungen oder führt Bedienhandlungen oder dgl. durch, die bis zu deren Abschluss nicht unterbrochen werden dürfen, kann der Operator manuell eine Ladebeschränkung (temporäre Empfangsverweigerung) oder eine Verarbeitungsbeschränkung des Operator Station Servers festlegen. Nach Abschluss seiner Arbeiten kann er die Beschränkung wieder zurücknehmen.

Da sich ein Operator Station Client, den der Operator zur Bedienung und Beobachtung der technischen Anlage nutzen kann, an unterschiedlichen Operator Station Servern anmelden kann, kann im Rahmen einer vorteilhaften Weiterbildung von dem Operator Station Server abgeleitet werden, welche (zusätzlichen) Operator Station Server von der Beschränkung betroffen sein müssen. Ist z.B. der Operator mit dem Operator Station Client an einem ersten Operator Station Server angemeldet und ändert die Parameter eines Reglers, der im Prozessabbild eines zweiten Operator Station Servers lokalisiert ist, müssen sowohl der erste als auch der zweite Operator Station Server in die Beschränkung mit einbezogen werden.

Bevorzugt ist der Operator Station Server dazu ausgebildet, ein Ende der bestimmten Zeitdauer von dem Operator der technischen Anlage beim Bedienen und Beobachten der technischen Anlage mitgeteilt zu bekommen.

Die zuvor formulierte Aufgabe wird zudem gelöst durch ein Verfahren zum Betrieb einer technischen Anlage mit einem Leitsystem, insbesondere Prozess- oder Fertigungsanlage, das einen Operator Station Server und einen Engineering Station Server aufweist, wobei der Engineering Station Server ein computerimplementiertes Entwurfswerkzeug umfasst, mit dem eine Automatisierungskonfiguration für eine Automatisierung der technischen Anlage erstellbar ist, und wobei der Engineering Station Server dazu ausgebildet ist, die Automatisierungskonfiguration für ein Bedienen und Beobachten der technischen Anlage an den Operator Station Server zu übertragen, wobei der Operator Station Server beim Vorliegen einer Abbruchbedingung ein Empfangen oder ein Verarbeiten der Automatisierungskonfiguration für das Bedienen und Beobachten der technischen Anlage für eine bestimmte Zeitdauer verweigert, und wobei der Operator Station Server das Vorliegen der Abbruchbedingung automatisiert durch das Erkennen einer möglichen Überlastung des Operator Station Servers durch das Empfangen der Automatisierungskonfiguration von dem Engineering Station Server oder durch das Verarbeiten der Automatisierungskonfiguration durch den Operator Station Server ermittelt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: eine schematische Darstellung eines erfindungsgemäßen Leitsystems;
- FIG 2: ein Anlagenbild zur Bedienung und Beobachtung gemäß einem ersten Aspekt; und
- FIG 3: das Anlagenbild aus FIG 2 gemäß einem zweiten Aspekt.

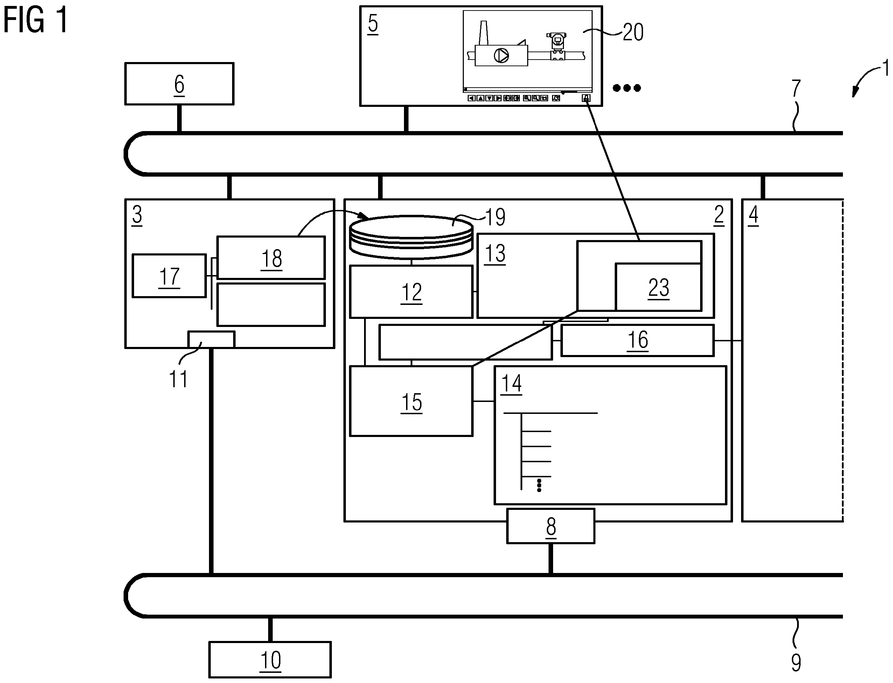

In FIG 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen ersten Operator Station Server 2 und einen Engineering Station Server 3. Zudem umfasst das Leitsystem 1 einen zweiten Operator Station Server 4, einen Operator Station Client 5 und einen Engineering Station Client 6.

Der erste Operator Station Server 2, der Engineering Station Server 3, der zweite Operator Station Server 4, der Operator Station Client 5 und der Engineering Station Client 6 sind über einen Terminalbus 7 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 5 mittels des Terminalbus 7 auf den ersten Operator Station Server 2 oder auf den zweiten Operator Station Server 4 zugreifen. Ein Projekteur kann im Zuge eines Engineerings bzw. Projektierens einer Automatisierung der Prozessanlage über den Engineering Station Client 6 mittels des Terminalbus 7 auf den Engineering Station Server 3 zugreifen. Der Terminalbus 7 kann, ohne sich darauf zu beschränken, beispielsweise als Industrial Ethernet ausgebildet sein.

Der erste Operator Station Server 2 weist eine Geräteschnittstelle 8 auf, die mit einem Anlagenbus 9 verbunden ist. Über diese Geräteschnittstelle 8 kann der erste Operator Station Server 2 mit einem Automatisierungsgerät 10 sowie mit optional vorhandenen weiteren Komponenten der Prozessanlage kommunizieren. Der Anlagenbus 9 kann, ohne sich darauf zu beschränken, beispielsweise als Industrial Ethernet ausgebildet sein. Das Automatisierungsgerät 10 kann mit einer beliebigen Anzahl an Subsystemen (nicht dargestellt) verbunden sein. Der Engineering Station Server 3 weist ebenfalls eine Geräteschnittstelle 11 zu dem Anlagenbus 9 und den damit verbundenen Komponenten wie dem Automatisierungsgerät 10 auf.

Auf dem ersten Operator Station Server 2 sind ein Datenverwaltungsdienst 12, ein Visualisierungsdienst 13 und ein Prozessabbild 14 implementiert. Zudem sind auf dem ersten Operator Station Server 2 ein Ladebeschränkungsdienst 15 und ein Verteilungsdienst 16 implementiert. Auf dem Engineering Station Server 3 sind ein Entwurfswerkzeug 17 und ein Kompilierungsdienst 18 implementiert.

Im Folgenden wird der Ablauf eines erfindungsgemäßen Verfahrens beschrieben: Der Projekteur erstellt mithilfe des computerimplementierten Entwurfswerkzeuges auf dem Engineering Station Server 3 eine Automatisierungskonfiguration 19 für eine Automatisierung der Prozessanlage. Die Automatisierungskonfiguration 19 dient dabei vor allem dazu, dass mit den einzelnen Prozesskomponenten automatisiert gemessen werden kann sowie die einzelnen Prozesskomponenten gesteuert und geregelt werden können. Auch eine Kommunikation zwischen den einzelnen Prozesskomponenten kann durch die Automatisierungskonfiguration bestimmt werden. Die Automatisierungskonfiguration 19 wird von dem Kompilierungsdienst 18 des Engineering Station Servers 3 in Formate gebracht, welche der erste Operator Station Server 2 bzw. das Automatisierungsgerät 10 verarbeiten können.

Die Automatisierungskonfiguration 19 wird anschließend von dem Engineering Station Server 3 zu dem ersten Operator Station Server 2 übertragen. Die Übertragung zu dem Automatisierungsgerät 10 wird im Weiteren nicht weiter thematisiert. Der Ladeverwaltungsdienst 12 prüft dabei, ob die Automatisierungskonfiguration 19 von dem ersten Operator Station Server 2 empfangen werden soll oder ob der Empfang für eine bestimmte Zeitdauer verweigert werden soll. Alternativ kann der Ladeverwaltungsdienst 12 auch zunächst ein Übertragen der Automatisierungskonfiguration 19 auf den ersten Operator Station Server 2 zulassen, aber ein Verarbeiten der Automatisierungskonfiguration 19 für eine bestimmte Zeitdauer verhindern. Damit befindet sich die Automatisierungskonfiguration 19 zwar physisch auf dem Operator Station Server 2, kommt aber nicht zur Anwendung und ist damit ohne Wirkung.

Das Verhindern des Empfangens bzw. des Verarbeitens der Automatisierungskonfiguration 19 wird von dem Ladeverwaltungsdienst 12 auf Anweisung durch den Ladebeschränkungsdienst 15 vorgenommen. Dieser triggert den Ladeverwaltungsdienst 12, wenn eine Abbruchbedingung vorliegt. Das Vorliegen der Abbruchbedingung kann von dem ersten Operator Station Server 2 selbst automatisiert ermittelt werden. Hierzu kann er beispielsweise prüfen, ob sich durch die Annahme und/oder die Verarbeitung der Automatisierungskonfiguration eine potenzielle Überlastungssituation für den ersten Operator Station Server 2 ergeben würde.

Die Abbruchbedingung kann aber auch von dem Operator vorgegeben werden. Hierzu kann der Operator durch den Operator Station Client 5 eine entsprechende Anforderung an den Ladebeschränkungsdienst 15 des ersten Operator Station Servers 2 stellen. Dabei der Operator beispielsweise vorgeben, dass für den Zeitraum von 30 Minuten keine (neue/aktualisierte) Automatisierungskonfiguration 19 von dem ersten Operator Station Server 2 verarbeitet werden soll, um den Operator beispielsweise bei der Ausführung einer kritischen Aufgabe nicht zu unterbrechen.

Das Ende der Zeitdauer kann nicht nur von dem Operator vorgebeben werden. Vielmehr kann der erste Operator Station Server 2 das Ende der Zeitdauer selbst, d.h. automatisiert, ermitteln, indem er beispielsweise Prognosen bezüglich der Auslastung seiner Ressourcen erstellt oder erstellen lässt und diese bei der Bestimmung des Endes der Zeitdauer berücksichtigt. Der Ladebeschränkungsdienst 15 kann auch auf Diagnosemeldungen von Recheneinheiten (CPU) des Operator Station Servers 2 zugreifen, die in dem Prozessabbild 14 hinterlegt sein. Ein Abbruchbedingung kann auch darin liegen, dass eine hohe Anzahl an Prozessalarmen in dem Prozessabbild 14 vorliegen (d.h. aktiv sind) und daher eine Verarbeitung oder ein Empfangen der Automatisierungskonfiguration aktuell nicht sinnvoll ist.

Wenn der Ladeverwaltungsdienst 12 den Empfangsvorgang oder den Verarbeitungsvorgang für die bestimmte Zeitdauer unterbrechen soll, erzeugt der Ladebeschränkungsdienst 15 parallel dazu eine Alarmmeldung, die in dem Prozessabbild 14 des ersten Operator Station Servers 2 hinterlegt wird. Auf diese Alarmmeldung haben der Projekteur und der Operator (in Form einer Meldefolgeanzeige auf dem Operator Station Client 5) Zugriff.

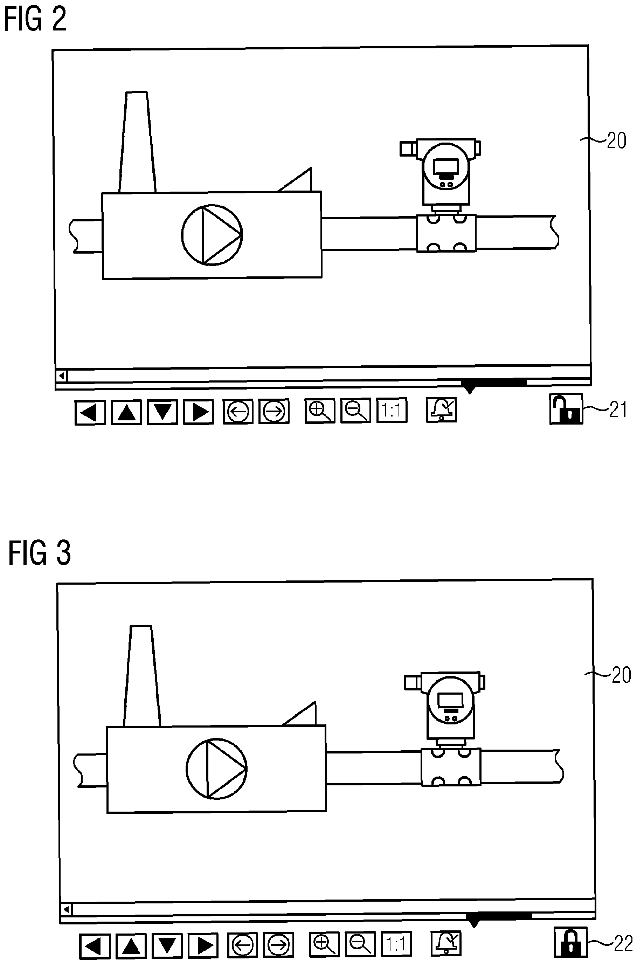

In FIG 2 ist ein Anlagenbild 20 gezeigt, welches dem Operator mittels des Operator Station Clients 5 dargestellt wird. Im rechten unteren Bereich des Anlagenbildes 20 wird dem Operator in Form eines geöffneten Schlosssymbols 21 verdeutlicht, dass aktuell keine Beschränkung des Empfangens oder Verarbeitens einer neuen oder aktualisierten Automatisierungskonfiguration 19 stattfindet. FIG 3 zeigt ein geschlossenes Schlosssymbol 22 für den gegenteiligen Fall - d.h. es findet eine Beschränkung statt.

Da sich ein Operator Station Client 5 an unterschiedlichen Operator Station Servern 2, 4 anmelden kann und durch die Distribution dennoch alle Prozessobjekte für die Bedienung und Beobachtung zugänglich sein können, ist auf dem ersten Operator Station Server 2 außerdem ein Beschränkungslokalisierungsdienst 23 implementiert. Dieser ermittelt, welche Operator Station Server 2, 4 von der Beschränkung des Empfangens/Verarbeitens betroffen sind. Ist z.B. der Operator mit dem Operator Station Client 5 an dem ersten Operator Station Server 2 angemeldet und ändert die Parameter eines Reglers, der in einem (nicht dargestellten) Prozessabbild des zweiten Operator Station Servers 4 lokalisiert ist, müssen sowohl der erste Operator Station Server 2 als auch der zweite Operator Station Server 4 in die Beschränkung mit einbezogen werden. Diese Information übermittelt der Beschränkungslokalisierungsdienst 23 an den Ladebeschränkungsdienst 15. Dieser veranlasst nun, dass der Datenverwaltungsdienst 12 des ersten Operator Station Servers 2 und ein Datenverwaltungsdienst des zweiten Operator Station Servers 4 (nicht dargestellt) die angeforderte Beschränkung durchführen, bis diese widerrufen wird, so dass beispielsweise der Operator eine kritische Aufgabe zu Ende bringen kann.

Insgesamt kann durch die Erfindung ein Beitrag für eine höhere Verfügbarkeit der technischen Anlage geleistet werden, speziell bei Anwendung eines webbasierten Leitsystems.

## Patentansprüche

1. Leitsystem (1) für eine technische Anlage, insbesondere Prozess- oder Fertigungsanlage, das einen Operator Station Server (2, 4) und einen Engineering Station Server (3) aufweist,
wobei der Engineering Station Server (3) ein computerimplementiertes Entwurfswerkzeug (17) umfasst, mit dem eine Automatisierungskonfiguration (19) für eine Automatisierung der technischen Anlage erstellbar ist,
und wobei der Engineering Station Server (3) dazu ausgebildet ist, die Automatisierungskonfiguration (19) für ein Bedienen und Beobachten der technischen Anlage an den Operator Station Server (2, 4) zu übertragen,
**dadurch gekennzeichnet, dass**
der Operator Station Server (2, 4) dazu ausgebildet ist, beim Vorliegen einer Abbruchbedingung ein Empfangen oder ein Verarbeiten der Automatisierungskonfiguration (19) für das Bedienen und Beobachten der technischen Anlage für eine bestimmte Zeitdauer zu verweigern,
wobei der Operator Station Server (2, 4) dazu ausgebildet ist, das Vorliegen der Abbruchbedingung durch das Erkennen einer möglichen Überlastung des Operator Station Servers (2, 4) durch das Empfangen der Automatisierungskonfiguration von dem Engineering Station Server (3) oder durch das Verarbeiten der Automatisierungskonfiguration (19) durch den Operator Station Server (2, 4) automatisiert zu ermitteln.

2. Leitsystem (1) nach Anspruch 1, bei dem der Operator Station Server (2, 4) dazu ausgebildet ist, den Engineering Station Server (3) über die Verweigerung des Empfangens oder des Verarbeitens der Automatisierungskonfiguration (19) zu informieren.

3. Leitsystem (1) nach Anspruch 1 oder 2, bei dem der Operator Station Server (2, 4) dazu ausgebildet ist, einen Operator der technischen Anlage über die Verweigerung des Empfangens oder des Verarbeitens der Automatisierungskonfiguration (19) zu informieren.

4. Leitsystem (1) nach einem der vorangegangenen Ansprüche, bei dem der Operator Station Server (2, 4) dazu ausgebildet ist, eine Alarmmeldung zu erzeugen, die eine Information über das Verweigern des Empfangens oder des Verarbeitens der Automatisierungskonfiguration (19) durch den Operator Station Server (2, 4) beinhaltet.

5. Leitsystem (1) nach Anspruch 4, bei dem der Operator Station Server (2, 4) dazu ausgebildet ist, einem Operator der technischen Anlage die Alarmmeldung in einer Meldefolgeanzeige darzubieten, bevorzugt mittels eines hierfür ausgebildeten Operator Station Clients (5).

6. Leitsystem (1) nach einem der vorangegangenen Ansprüche, bei dem der Operator Station Server (2, 4) dazu ausgebildet ist, ein Ende der bestimmten Zeitdauer automatisiert zu ermitteln, vorzugsweise durch das Erkennen eines Wegfalls einer möglichen Überlastung des Operator Station Servers (2, 4) durch das Empfangen der Automatisierungskonfiguration (19) von dem Engineering Station Server (3) oder durch das Verarbeiten der Automatisierungskonfiguration (19).

7. Leitsystem (1) nach einem der vorangegangenen Ansprüche, bei dem der Operator Station Server (2, 4) dazu ausgebildet ist, das Vorliegen der Abbruchbedingung von einem Operator der technischen Anlage beim Bedienen und Beobachten der technischen Anlage mitgeteilt zu bekommen.

8. Leitsystem (1) nach Anspruch 7, bei dem der Operator Station Server (2, 4) dazu ausgebildet ist, ein Ende der bestimmten Zeitdauer von dem Operator der technischen Anlage beim Bedienen und Beobachten der technischen Anlage mitgeteilt zu bekommen.

9. Verfahren zum Betrieb einer technischen Anlage mit einem Leitsystem (1), insbesondere Prozess- oder Fertigungsanlage, das einen Operator Station Server (2, 4) und einen Engineering Station Server (3) aufweist,
wobei der Engineering Station Server (3) ein computerimplementiertes Entwurfswerkzeug (17) umfasst, mit dem eine Automatisierungskonfiguration (19) für eine Automatisierung der technischen Anlage erstellbar ist,
und wobei der Engineering Station Server (3) dazu ausgebildet ist, die Automatisierungskonfiguration (19) für ein Bedienen und Beobachten der technischen Anlage an den Operator Station Server (2, 4) zu übertragen,
dadurch gekennzeuichnet, dass
der Operator Station Server (2, 4) beim Vorliegen einer Abbruchbedingung ein Empfangen oder ein Verarbeiten der Automatisierungskonfiguration (19) für das Bedienen und Beobachten der technischen Anlage für eine bestimmte Zeitdauer verweigert,
wobei der Operator Station Server (2, 4) das Vorliegen der Abbruchbedingung automatisiert durch das Erkennen einer möglichen Überlastung des Operator Station Servers (2, 4) durch das Empfangen der Automatisierungskonfiguration von dem Engineering Station Server (3) oder durch das Verarbeiten der Automatisierungskonfiguration (19) durch den Operator Station Server (2, 4) ermittelt.

## Claims

1. Control system (1) for a technical plant, in particular a process or production plant, which has an operator station server (2, 4) and an engineering station server (3),
wherein the engineering station server (3) comprises a computer-implemented design tool (17), with which an automation configuration (19) for an automation of the technical plant is able to be created,
and wherein the engineering station server (3) is embodied to transmit the automation configuration (19) for an operation and monitoring of the technical plant to the operator station server (2, 4),
**characterised in that**
the operator station server (2, 4) is embodied, if an abort condition is present, to refuse for a specific period of time a receipt or a processing of the automation configuration (19) for the operation and monitoring of the technical plant, wherein the operator station server (2, 4) is embodied to establish the presence of the abort condition automatically, through the recognition of a possible overloading of the operator station server (2, 4) by the receipt of the automation configuration from the engineering station server (3) or by the processing of the automation configuration (19) by the operator station server (2, 4).

2. Control system (1) according to claim 1, in which the operator station server (2, 4) is embodied to inform the engineering station server (3) about the refusal of the receipt or the processing of the automation configuration (19) .

3. Control system (1) according to claim 1 or 2, in which the operator station server (2, 4) is embodied to inform an operator of the technical plant about the refusal of the receipt or the processing of the automation configuration (19) .

4. Control system (1) according to one of the preceding claims,
in which the operator station server (2, 4) is embodied to create an alarm message, which includes information about the refusal of the receipt or the processing of the automation configuration (19) by the operator station server (2, 4).

5. Control system (1) according to claim 4, in which the operator station server (2, 4) is embodied to provide an operator of the technical plant with the alarm message in a message sequence display, preferably by means of an operator station client (5) embodied for this.

6. Control system (1) according to one of the preceding claims, in which the operator station server (2, 4) is embodied to establish an end of the specific period of time automatically, preferably by the removal of a possible overloading of the operator station server (2, 4) by the receipt of the automation configuration (19) from the engineering station server (3) or by the processing of the automation configuration (19).

7. Control system (1) according to one of the preceding claims,
in which the operator station server (2, 4) is embodied to obtain a notification of the presence of the abort condition from an operator of the technical plant during operation and monitoring of the technical plant.

8. Control system (1) according to claim 7, in which the operator station server (2, 4) is embodied to obtain a notification of the end of the specific period of time from the operator of the technical plant during operation and monitoring of the technical plant.

9. Method for operating a technical plant with a control system (1), in particular a process or production plant, which has an operator station server (2, 4) and an engineering station server (3),
wherein the engineering station server (3) comprises a computer-implemented design tool (17), with which an automation configuration (19) for an automation of the technical plant is able to be created,
and wherein the engineering station server (3) is embodied to transmit the automation configuration (19) for an operation and monitoring of the technical plant to the operator station server (2, 4),
**characterised in that**
the operator station server (2, 4), if an abort condition is present, refuses for a specific period of time a receipt or a processing of the automation configuration (19) for the operation and monitoring of the technical plant,
wherein the operator station server (2, 4) establishes the presence of the abort condition automatically, through the recognition of a possible overloading of the operator station server (2, 4) by the receipt of the automation configuration from the engineering station server (3) or by the processing of the automation configuration (19) by the operator station server (2, 4).

## Revendications

1. Système (1) de conduite d'une installation technique, en particulier d'une installation de processus ou de fabrication, qui a un serveur (2, 4) de poste d'opérateur et un serveur (3) de poste d'ingénierie,
dans lequel le serveur (3) de poste d'ingénierie comprend un outil (17) de projet mis en oeuvre par ordinateur, par lequel une configuration (19) d'automatisation peut être établie pour une automatisation de l'installation technique,
et dans lequel le serveur (3) de poste d'ingénierie est constitué pour transmettre au serveur (2, 4) de poste d'opérateur la configuration (19) d'automatisation pour une commande et une observation de l'installation technique,
**caractérisé en ce que**
le serveur (2, 4) de poste d'opérateur est constitué pour, en présence d'une condition de rupture, refuser, pendant une durée déterminée, une réception ou un traitement de la configuration (19) d'automatisation pour la commande et l'observation de l'installation technique,
dans lequel le serveur (2, 4) de poste d'opérateur est constitué pour déterminer, de manière automatisée, la présence de la condition de rupture par la détection d'une surcharge éventuelle du serveur (2, 4) de poste d'opérateur par la réception de la configuration d'automatisation par le serveur (3) de poste d'ingénierie ou par le traitement de la configuration (19) d'automatisation par le serveur (2, 4) de poste d'opérateur.

2. Système (1) de conduite suivant la revendication 1, dans lequel le serveur (2, 4) de poste d'opérateur est constitué pour informer le serveur (3) de poste d'ingénierie du refus de la réception ou du traitement de la configuration (19) d'automatisation.

3. Système (1) de conduite suivant la revendication 1 ou 2, dans lequel le serveur (2, 4) de poste d'opérateur est constitué pour informer un opérateur de l'installation technique du refus de la réception ou du traitement de la configuration (19) d'automatisation.

4. Système (1) de conduite suivant l'une des revendications précédentes, dans lequel le serveur (2, 4) de poste d'opérateur est constitué pour produire un message d'alerte, qui contient une information sur le refus de la réception ou du traitement de la configuration (19) d'automatisation par le serveur (2, 4) de poste d'opérateur.

5. Système (1) de conduite suivant la revendication 4, dans lequel le serveur (2, 4) de poste d'opérateur est constitué pour présenter, à un opérateur de l'installation technique le message d'alerte dans une indication de suivi de message, de préférence au moyen d'un client (5) de poste d'opérateur constitué à cet effet.

6. Système (1) de conduite suivant l'une des revendications précédentes, dans lequel le serveur (2, 4) de poste d'opérateur est constitué pour rechercher de manière automatisée une fin de la durée déterminée, de préférence par la détection de la suppression d'une surcharge éventuelle du serveur (2, 4) de poste d'opérateur par la réception de la configuration (19) d'automatisation par le serveur (3) de poste d'ingénierie ou par le traitement de la configuration (19) d'automatisation.

7. Système (1) de conduite suivant l'une des revendications précédentes, dans lequel le serveur (2, 4) de poste d'opérateur est constitué pour que lui soit communiquée, lors de la commande et de l'observation de l'installation technique, la présence de la condition de rupture par un opérateur de l'installation technique.

8. Système (1) de conduite suivant la revendication 7, dans lequel le serveur (2, 4) de poste d'opérateur est constitué pour que lui soit communiquée par l'opérateur de l'installation technique une fin de la durée déterminée, lors de la commande et de l'observation de l'installation technique.

9. Procédé pour faire fonctionner une installation technique par un système (1) de conduite, en particulier une installation de processus ou de fabrication, qui a un serveur (2, 4) de poste d'opérateur et un serveur (3) de poste d'ingénierie,
dans lequel le serveur (3) de poste d'ingénierie comprend un outil (17) de projet mis en oeuvre par ordinateur, par lequel une configuration (19) d'automatisation peut être établie pour une automatisation de l'installation technique,
et dans lequel le serveur (3) de poste d'ingénierie est constitué pour transmettre au serveur (2, 4) de poste d'opérateur la configuration (19) d'automatisation pour une commande et une observation de l'installation technique,
**caractérisé en ce que**
le serveur (2, 4) de poste d'opérateur refuse pendant une durée déterminée, en présence d'une condition de rupture, une réception ou un traitement de la configuration (19) d'automatisation pour la commande et l'observation de l'installation technique,
dans lequel le serveur (2, 4) de poste d'opérateur détermine la présence de la condition de rupture d'une manière automatisée par la détection d'une surcharge éventuelle du serveur (2, 4) de poste d'opérateur par la réception de la configuration d'automatisation par le serveur (3) de poste d'ingénierie ou par le traitement de la configuration (19) d'automatisation par le serveur (2, 4) de poste d'opérateur.
